# EUROPÄISCHE PATENTSCHRIFT

(11) **EP 0 521 850 B1**
(45) Veröffentlichungstag und Bekanntmachung des Hinweises auf die Patenterteilung: **30.03.1994**
(21) Anmeldenummer: 90908487.3
(22) Anmeldetag: 01.06.1990
(51) Int. Cl.: B60R 21/00

(54) **ANORDNUNG ZUR ANBRINGUNG EINES AIRBAG IN EINEM FAHRZEUGLENKRAD**
ARRANGEMENT FOR SECURING AN AIRBAG ON THE STEERING WHEEL OF A VEHICLE
AGENCEMENT DE FIXATION D'UN COUSSIN PNEUMATIQUE DE SECURITE SUR LE VOLANT D'UN VEHICULE

(30) Priorität: 23.03.1990 DE 9003439 U
(43) Veröffentlichungstag der Anmeldung: 13.01.1993
(73) Patentinhaber: SIEMENS AKTIENGESELLSCHAFT, 80333 München (DE)
(72) Erfinder: PLANKL, Christian, D-8411 Fussenberg (DE); GUGGENBERGER, Johann, D-8401 Mintraching (DE); DIRMEYER, Josef, D-8465 Bodenwöhr-Neuenschwand (DE)
(86) Internationale Anmeldenummer: DE9000423
(87) Internationale Veröffentlichungsnummer: WO9114601

(56) Entgegenhaltungen:
- EP-A- 283 188
- DE-A- 2 711 192
- DE-A- 3 619 937
- DE-C- 3 817 481

## Beschreibung

Die Erfindung betrifft eine Weiterentwicklung eines Lenkrades eines Fahrzeuges, bei dem in der Lenkradnabe ein Airbag angebracht ist.

Solche Lenkräder sind in größerer Anzahl vorbekannt, vgl. z.B.
- DE-A1-27 11 192,
- DE-A1-27 55 649,
- DE-A1-29 05 618,
- DE-C1-36 21 226 und
- US 3,888,508.
Aus diesen vorbekannten Schriften ist nicht erkennbar, wie die Stromversorgung vom Bordnetz zu elektronischen Einheiten im Lenkrad wirklich erreicht wird, - falls dort eine solche überhaupt benötigt bzw. angebracht ist.

Daneben sind ähnliche Lenkräder vorbekannt, bei denen die Stromversorgung vom Bordnetz zu den elektronischen Einheiten im Lenkrad jeweils über einen Schleifring erreicht wird, vgl.
- DE-A131 08 757,
- DE-A1-36 19 937,
- DE-A1-36 30 685 und
- US 3,968,979.
Die Erfindung läßt zwar zu, zusätzlich einen solchen Schleifring zu benutzen. Weiterbildungen der Erfindung vermeiden aber einen solchen Schleifring, weil er für die hier üblichen Spannungen besonders wegen Korrosion, Abrieb und Verdrecken oft noch zu unzuverlässig ist.

Durch
- DE-A1-30 09 109,
- DE-C2-38 08 778 und
- FR-A1-2 477 789
sind spiralförmig um eine Achse gewickelte Leitungs-Zwischenstücke, insbesondere für Lenkräder mit Airbag in Fahrzeugen, vorbekannt, ohne daß dort genauer der damit zu verbindende Anschluß der Elektronik im Lenkradinneren beschrieben ist.

Die Erfindung stellt eine Weiterentwicklung des speziellen Lenkrades dar, das im Oberbegriff des Hauptanspruches definiert und für sich durch die
- DE-C1-38 17 481
vorbekannt ist. Dieses vorbekannte Lenkrad besitzt statt eines Schleifringes ein - zumindest im Prinzip weniger gegen Korrosion, Abrieb und Verdrecken empfindliches - Steckerpaar, welches zumindest in jene Verbindungsleitungen eingefügt ist, die zwischen dem Bordnetz und der im Lenkrad mitenthaltenen Steuerelektronik des Airbag liegt.

Dieses bekannte Lenkrad hat bereits den auch bei der Erfindung nutzbaren Vorteil,
- daß eine solche Airbag-Anordnung sehr kompakt ist und auch hinsichtlich Design günstig in einem Fahrzeug, z.B. in einem KFZ, unterbringbar ist, sowie
- daß das (zur Abschirmung meistens metallische) Gehäuse der Steuerelektronik so nah an der Zündpille des Gasgenerators untergebracht ist, daß schon deswegen die Einkopplung von elektrischen, magnetischen und elektromagnetischen Störsignalen in die Leitung(en) / Kabel zwischen der Steuerelektronik und der Zündpille leicht vermeidbar sind - solche Einkopplungen könnten nämlich fehlerhafterweise den Gasgenerator des Airbag zünden und damit den Fahrzeuglenker
überüßßßßßßßßßährend einer Fahrt extrem gefährden.

Nachteilig bei dieser vorbekannten Anordnung ist aber die Schwierigkeit, auf diese Weise eine weit über ein Jahrzehnt hinaus zuverlässige, trotzdem leicht montierbare, in das betreffende Kabel eingefügte elektrische Steckverbindung zwischen der Stromversorgungsleitung über die Lenksäule einerseits und des im Lenkrad mitdrehbar angeordneten Gehäuses der Steuerelektronik andererseits herzustellen. Überdies kann sich in manchen Crashsituationen die Verbindung zwischen den Steckern der Steckverbindung lösen; es kann dann also die Stromversorgung der Steuerelektronik ausfallen.

Die Aufgabe der Erfindung ist,
- die Montage der im übrigen möglichst raumsparenden Anordnung so zu erleichtern, daß selbst eine Montage in Großserie durch nur angelerntes, also mäßig geschultes Personal ausreichend zuverlässig möglich ist, - vor allem auch, um ein nachträgliches Testen des fertig montierten Lenkrades stark einschränken oder gar entbehren zu können,
- zumindest im Prinzip eine große Vielfalt der Montagereihenfolgen bei der Herstellung des Lenkrades und bei seinem Einbau in das Fahrzeug zu gestatten,
- die Zuverlässigkeit der Stromversorgung trotzdem extrem langfristig auch während des Betriebes des Fahrzeuges sicherzustellen, sowie
- zumindest im Prinzip die Möglichkeit zu bieten, die Anordnung später, z.B. nach einem Crash mit Auslösung des Airbag, in ebenso einfacher Weise langfristig zuverlässig reparieren zu können, nämlich im allgemeinen schon durch narrensicheres einfaches leichtes Austauschen der im Lenkrad befestigten Teile gegen gleiche neue Teile.

Diese Aufgabe der Erfindung wird durch die im Hauptanspruch angegebenen Maßnahmen gelöst.

Eigene Untersuchungen ergaben nämlich zunächst einen Katalog von Einzelforderungen, um langfristig eine möglichst hohe Zuverlässigkeit der Erfindung - und ihrer Weiterbildungen - zu erreichen, - wobei viele der Einzelforderungen erst durch die in den Unteransprüchen erfaßten Maßnahmen gelöst werden. Alle Einzelforderungen standen aber unter vier generellen, möglichst stets anzustrebenden Zielen, nämlich
- Schon während der Montage sollen Fehler in narrensicher Weise vermieden werden,
   ° vor allem auch eine rauhe Behandlung der Teile sollte während der ganzen Montage weitgehend zulässig sein,
   ° das unvorsichtige Ziehen an Leitungen oder Herumstochern an Leitungen und Steckern mit harten Gegenständen durch unvorsichtiges Personal sollte bei der Montage erschwert sein;
- Später sollen über alle Jahre des Betriebes des Fahrzeuges hinweg möglichst keine Schäden an Kabeln, Leitungen und Steckverbindungen auftreten, und zwar
   ° weder durch die praktisch unvermeidbaren, vom Motor und von Fahrbahnunebenheiten ausgehenden Vibrationen,
   ° noch durch unachtsames Reinigen des Lenkrades,
   ° noch durch die Trägheitskräfte bei einem Crash indem sich dann die Steckverbindung möglichst nicht lösen soll, sondern wirksam bleiben soll,
   ° auch weitgehend nicht durch rauhe Behandlung des Lenkrades;
- Die erfindungsgemäße Lösung soll bei Bedarf noch kompakter als die bekannte gestaltet werden können, damit das erfindungsgemäße Lenkrad mit Airbag bei Bedarf auch wenigstens etwas zierlicher und hinsichtlich Design noch flexibler gestaltet werden kann als das bekannte Lenkrad; sowie
- Die Anordnung soll nach einem Crash, also nach einem Zünden des Gasgenerators im Prinzip ebenso leicht und narrensicher reparierbar sein wie bei der erstmaligen Montage.

Erschwert war die Aufgabe der Erfindung vor allem auch dadurch, daß es im Lenkradbereich nur wenig Platz gibt, um dort die Stecker und Leitungen / Kabel, die Elektronik, den Gasgenerator und den Airbag unkompliziert, platzsparend und narrensicher anbringen zu können und auch hinsichtlich des Design gute Lösungen zuzulassen.

Die Analyse der Nachteile des Standes der Technik ergab ferner, daß es besonders ungünstig ist, wenn bei der Montage zuerst der Gasgenerator des Airbag und das zugehörende Gehäuse der Steuerelektronik mit dem Lenkrad mechanisch starr verbunden wird, bevor endgültig alle Leitungen von der Lenksäule zur Steuerelektronik im Lenkrad verlegt werden. Besonders ungünstig wäre es, wenn zur nachträglichen Herstellung der Stromversorgung umständlich die zugehörenden elektrischen Leitungen im Lenkrad eingefädelt und wenn gar erst dann noch nachträglich die Stecker innerhalb des Lenkrades ineinander geschoben werden müßten.

Die Erfindung vermeidet daher ein Kabel bzw. eigene Leitungen zwischen dem Gehäuse der Steuerelektronik und dem zu diesem Gehäuse gehörenden (genannt : zweiten) Stecker, weil letzterer unmittelbar an jenem Gehäuse befestigt ist - Leitungen, die schon wegen der scheuernden Fahrzeugvibrationen gefährdet sind, besonders weil sich ein Steckerpaar, das mehr oder weniger locker in der Lenkradnabe an Leitungen hängt, zusammen mit benachbarten Leitungsabschnitten auch mehr oder weniger wie eine seismische Masse verhält. Im übrigens läßt es die Erfindung zu, im Prinzip beliebige Typen von Steckverbindungen zu wählen, z.B. solche mit Stiften und Buchsen, aber auch andere, z.B. mit aneinander gepreßten Stirnflächen.

Durch die Erfindung entfällt auch die Notwendigkeit, im Lenkrad diese Leitung(en) bzw. dieses Kabel zwischen dem Gehäuse der Steuerelektronik und dessen Stecker nachträglich umständlich einfädeln zu müssen, ebenso die Verbindung zwischen diesem Stecker und dem zugeordneten Stecker der Verbindungsleitung(en) nachträglich (womöglich mit Zangen, und mit nachträglichem Ziehen und Verschieben von Leitungen) verbinden zu müssen. Man kann also durch die Erfindung eine komplizierte manuelle Montage dieses Steckerpaares und die eine besondere Sorgfalt erfordernde Verlegung der zugehörenden Leitung(en) von dem Steckerpaar zur Steuerelektronik vermeiden, erst recht eine solche Verlegung erst nach dem Befestigen des Gehäuses der Steuerelektronik im Lenkrad. Im übrigen gestattet die Erfindung trotz der Steckverbindung besonders gut, im Lenkrad Platz zu sparen.

Vorweg sei hier schon festgestellt, was sich später aus der Beschreibung der Figuren noch deutlicher ergeben wird :

Die Position des betreffenden Steckers bzw. der betreffenden Stecker ist während der - überdies besonders einfach erreichbaren - Montage der Anordnung, besonders beim Einschieben des Gehäuses der Steuerelektronik in die entsprechende Aussparung in der Lenkradnabe, vom Monteur weggerichtet und schon deswegen vor Beschädigungen nach dem Einschieben, z.B. beim Zwischenlagern in Kisten, recht gut geschützt, wobei es oft gerade ab dann aufwendiger würde, Schäden an der Leitung zwischen dem betreffenden Stecker und der Steuerelektronik nachträglich zu erkennen. Diese Steckverbindung ist überdies erst recht während der späteren Benutzungen des Fahrzeuges weitgehend geschützt.

Vor allem ist durch die Erfindung bei Bedarf auch von Anfang an vermeidbar, daß jene Steckverbindung hinten aus der Lenkradnabe ungeschützt hervorragt. Die bei der Erfindung gut geschützte Stelle der Steckverbindung liegt in einem Raum, der mehr oder weniger nahe der Lenkradnabe und der betreffenden (Unter-)Seite des Gehäuses der Steuerelektronik liegt. Die Steckverbindung zwischen den beiden betreffenden (genannt : ersten und zweiten) Steckern befindet sich damit bei der Erfindung, nach dem Befestigen des Gehäuses der Steuerelektronik am Lenkrad, an einer dann nur noch schwer von außen zugänglichen Stelle in der Lenkradnabe, abgedeckt vor allem einerseits durch Teile der Lenkradnabe, andererseits durch das Gehäuse der Steuerelektronik - später auch noch durch den Gasgenerator, den Airbag und eine alles bedeckende Lenkradnaben-Abdeckung, sowie evtl. auch noch durch die später beschriebene "Kapsel". Diese Steckverbindung ist also bei der Erfindung weder bei der erstmaligen Montage noch später bei (laienhaft ausgeführten) Reparaturen so wie beim bekannten Lenkrad gefährdet. Die erfindungsgemäße Lösung ist überdies besonders kompakt.

Die in den Unteransprüchen angegebenen zusätzlichen Maßnahmen gestatten, zusätzliche Vorteile zu erreichen. Unter anderem gestatten nämlich die Maßnahmen gemäß Patentanspruch
2, genügend Platz für einen Zugriff auf die Befestigung, insbesondere Verschraubung, des Lenkrades mit der Lenkspindel trotz des bereits befestigten Gehäuses der Steuerelektronik zu erreichen,
   ° sowohl um zuverlässig zunächst den ersten Stecker mit dem zweiten Stecker verbinden sowie das Gehäuse der Steuerelektronik an der Lenkradnabe narrensicher befestigen zu können, bevor dieses Zwischenprodukt - selbst bei einer Großserienfertigung mit nur angelerntem Personal - an der Lenkspindel befestigt wird,
   ° als auch um bei Bedarf das Lenkrad später beliebig oft von der Lenkspindel wieder trennen und dort wieder befestigen zu können, ohne die Zuverlässigkeit der Verbindung des ersten Steckers mit dem zweiten Stecker zu gefährden, solange hierbei ständig das Gehäuse am Lenkrad befestigt bleibt;
3, den ersten Stecker, auch noch nach der Befestigung des Gehäuses der Steuerelektronik am Lenkrad, mit dem zweiten Stecker in einem in der Lenkradnabe seitlich von dem Zentralloch liegenden Fenster verbinden zu können;
4, genügend Platz für einen Zugriff auf die Befestigung des ersten Steckers an der / den ihm zugeordneten Verbindungsleitung(en) zu erreichen,
   ° sowohl um zuverlässig zunächst den ersten Stecker mit der / den betreffenden Verbindungsleitung(en) zu verbinden unabhängig davon, ob bereits das Gehäuse der Steuerelektronik an der Lenkradnabe befestigt wurde oder nicht, und zwar selbst bei einer Großserienfertigung mit nur angelerntem Personal,
   ° als auch um bei Bedarf diese Verbindung des ersten Steckers mit der / den zugeordneten Verbindungsleitung(en) später beliebig oft wieder trennen und wieder befestigen zu können, ohne die Zuverlässigkeit der Verbindung des ersten Steckers mit dem zweiten Stecker zu gefährden, jedenfalls solange hierbei ständig zumindest das Gehäuse am Lenkrad befestigt bleibt;
5, weitere, gut geschützte Steckverbindungen zwischen den betreffenden Signalausgängen der Steuerelektronik einerseits und einem oder mehreren zusätzlich angebrachten Leitungen / Kabeln andererseits zu erreichen, wobei solche Kabel elektrische Verbindungen z.B. zur Zündpille des Gasgenerators des Airbag und / oder auch zu sonstigen Organen der Anordnung herstellen können;
6, in montagefreundlicher Weise auch eine Anzeige für den Fahrzeuglenker hinsichtlich der Funktionstüchtigkeit seiner Anordnung zu erreichen;
7, auch die im Patentanspruch 2 definierte weitere Steckverbindung sowohl während der Montage als auch während der späteren Benutzung des Fahrzeugs gut geschützt im Raume zwischen der Lenkradnabe und dem Gehäuse der Steuerelektronik anbringen zu können;
8 und 9, eine besonders kompakte, raumsparende und aufwandssparende Gestaltung der betreffenden Steckverbindungen zu erreichen, wobei eine zusätzliche Verrastung z.B. eine verrutschsichere Verbindung des ersten Steckers mit dem vierten Stecker erleichtern kann;
10, die Steckverbindung(en) im Raume zwischen der Lenkradnabe und dem Gehäuse der Steuerelektronik während der folgenden Phasen der Montage und während der späteren Benutzungen des Fahrzeuges besonders gut schützen zu können, trotz der Einfachheit der Montage, und zwar in besonders Platz sparen der Weise;
11, nebenher in gleich vorteilhafter Weise noch Signalverbindungen zu anderen Organen in der Karosserie, z.B. am Armaturenbrett bzw. am Instrumentenpaneel - oder auch zu sonstigen Orten im KFZ - zu erreichen, ohne dadurch die Montage verkomplizieren zu müssen;
12, einen Schleifring zwischen den Stromführungsleitungen einerseits und dem ersten Stecker andererseits vermeiden zu können, wobei ein Schleifring durch Verschmutzen, Korrodieren und Abnutzen die Zuverlässigkeit der Anordnung beeinträchtigen könnte, wobei also eine zuverlässige Verbindung zwischen den Stromführungsleitungen einerseits und dem ersten Stecker bzw. dessen Anschluß andererseits in raumsparender, montagefreundlicherweise ermöglicht wird; sowie
13, den ersten Stecker ausreichend kippfest für die narrensichere leichte Montage bereitzustellen und das Leitungs-Zwischenstück mit wenig Aufwand gegen Beschädigungen und Verschmutzungen schützen zu können.

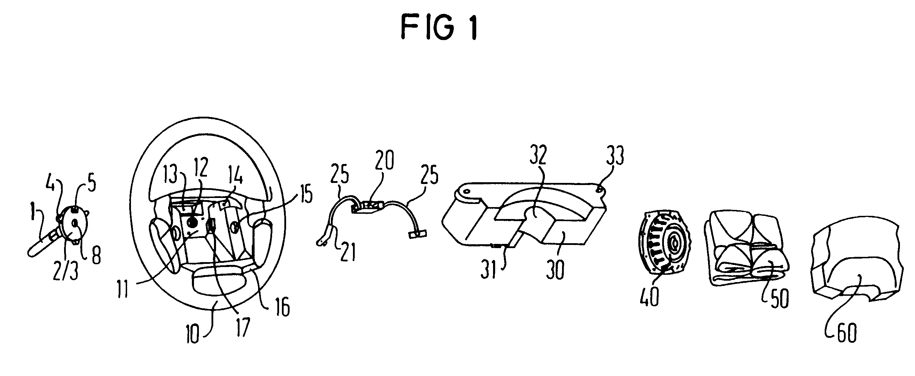

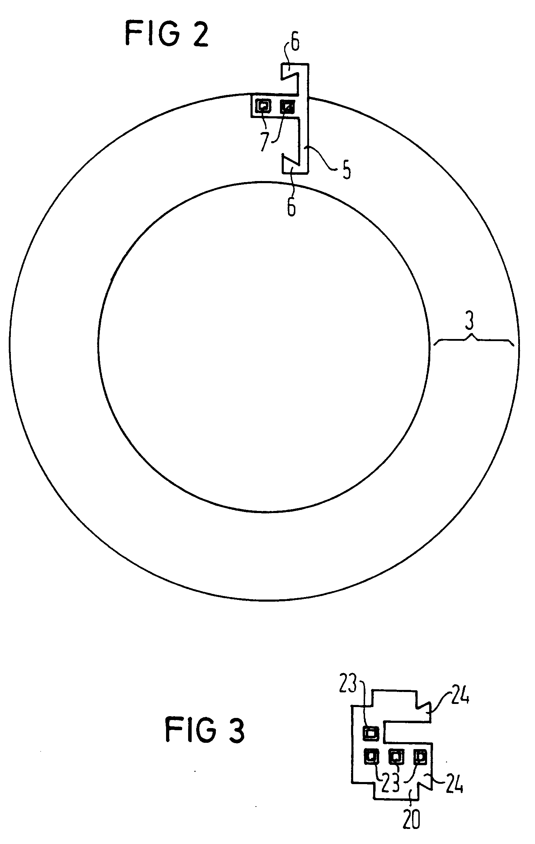

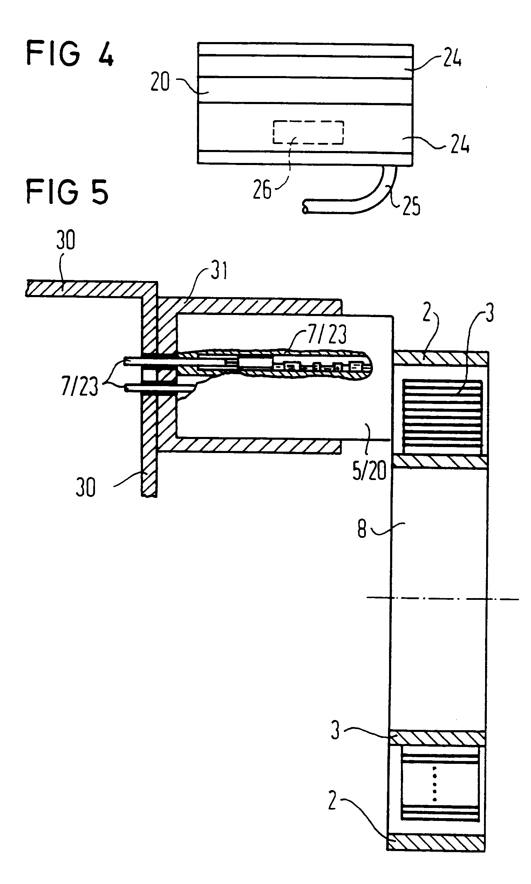

Die Erfindung und ihre Weiterbildungen werden anhand des in den fünf Figuren gezeigten Beispiels weiter erläutert. Dabei zeigt die Figur
- 1: eine Explosionsdarstellung der Teile des erfindungsgemäßen Beispiels vor seiner Montage;
- 2: eine Draufsicht auf den hier zweipoligen ersten Stecker, in etwa gesehen von der späteren Position des Fahrzeuglenkers;
- 3: eine Draufsicht auf ein bereits in der Figur 1 angedeutetes, hier vierpoliges Buchsengehäuse, gesehen aus derselben späteren Position des Fahrzeuglenkers, wobei dieses Buchsengehäuse einen vierten Stecker darstellt, welcher in den in der Figur 2 gezeigten ersten Stecker mittels Schwalbenschwänzen hineingeschoben und damit lagestabilisiert werden kann;
- 4: eine Seitenansicht des in der Figur 3 gezeigten Buchsengehäuses; und
- 5: - wegen der Übersichtlichkeit unter Weglassung des Lenkrades - eine Seitenansicht der endgültigen Verbindung aller vier Stecker, nämlich nach dem Verbinden des auch in den Figuren 1 und 2 gezeigten ersten Steckers und des auch in den Figuren 1, 3 und 4 gezeigten Buchsengehäuses mit dem auch in der Figur 1 gezeigten, an dem Gehäuse der Steuerelektronik befestigten Steckergebilde, welches seinerseits gemeinsam den zweiten und dritten Stecker bildet.

Die Figur 1 zeigt also nebeneinander Teile des erfindungsgemäßen Beispiels mit im Lenkrad 10 angebrachtem Airbag 50, und zwar von links nach rechts in solcher Reihenfolge, wie sie übereinander montiert werden.

Der in der Figur 1 gezeigte Airbag 50 wird im Crashfalle von dem Gasgenerator 40 aufgeblasen. 30 ist das Gehäuse der Steuerelektronik, welche im Crashfalle die Zündpille des Gasgenerators 40 elektrisch zündet und welche nach der Montage unter dem Gasgenerator 40 in der Aussparung 11 im Bereich der Nabe des Lenkrades 10 befestigt ist.

Im fertig montierten Zustand ist der Airbag 50 durch die Abdeckkappe 60 abgedeckt, wobei diese Abdeckkappe auch die Taste für die Hupe des Fahrzeuges bilden kann. Der Fahrzeuglenker sieht also während der Fahrt nur die designmäßig gut gestaltbare Abdeckkappe 60 in der Lenkradnabe, aber nicht den darunter liegenden Airbag 50, den Gasgenerator 40 und das Gehäuse 30 der Steuerelektronik.

Die Figur 1 zeigt auch ein durchgehendes Zentralloch 12, mit welchem das Lenkrad 10 an der Lenkspindel befestigt, bevorzugt verschraubt, wird.

Am Lenkrad 10 ist ein mindestens einpoliges - hier zweipoliges - Steckerpaar 5/31 angebracht - also z.B. eine zweipolige Steckerbuchse 5 und ein zweipoliger Steckerstift 31. Der erste Stecker 5 dieses Steckerpaares 5/31 ist der / den Verbindungsleitung(en) 1 zugeordnet und im fertig montiertem Zustand in der Aussparung 11 der Lenkradnabe - genauer : hier in deren Fenster 13 - angebracht. Der zweite Stecker 31 dieses Steckerpaares 5/31 ist der Steuerelektronik 30 zugeordnet und am Gehäuse 30 dieser Steuerelektronik ausreichend kippfest angebracht, vgl. die Figur 1. Anschlüsse 7 des ersten Steckers 5, bzw. die in der Figur 2 gezeigten Pole 7 dieses ersten Steckers 5, werden z.B. mit dem Bordnetz und / oder mit anderen elektrischen Organen über die in der Figur 1 gezeigten Verbindungsleitungen 1 verbunden, nämlich mindestens mit der - z.B. zweipoligen - Stromversorgungsleitung 1 der Steuerelektronik 30, wobei diese Verbindungsleitung 1 von der Lenksäule direkt, oder indirekt über weitere Einheiten wie z.B. das Zündschloß, zu einem Anschluß der Batterie geführt sein kann.

Sowohl der - z.B. zweipolige - zweite Stecker 31 als auch ein weiterer, dritter Stecker, der zusammen mit dem zweiten Stecker 31 ein einziges kompaktes Steckergebilde 31 bildet, sind in diesem Beispiel im fertig montierten Zustand des Lenkrades im Fenster 13 der Lenkradnabe abseits vom Zentralloch 12 angebracht. Dieses hier gemeinsam aus dem zweiten und dritten Stecker bestehende Steckergebilde 31 ist am Gehäuse 30 der Steuerelektronik, bzw. an einem steifen Teil 30 derselben, jeweils ausreichend kippfest und verrutschfest so befestigt, daß bei der Montage des Lenkrades 10 die Pole des betreffenden zweiten Steckers im Steckergebilde 31 mühelos in bzw. auf die entsprechenden Pole 7 des ersten Stecker 5 steckbar ist, und zwar z.B. durch Andrücken des Gehäuses 30 der Steuerelektronik zumindest angenähert in Richtung vom Lenkrad 10 zur Lenkspindel hin parallel zur Lenksäule, und / oder durch Andrücken des ersten Steckers 5 an den zweiten Stecker 31 von hinten her in entgegengesetzter Richtung.

Während der zweite Stecker 5 in das Fenster 13 hineinragt, wird das dann in der Aussparung 11 liegende Gehäuse 30 der Steuerelektronik seinerseits am Lenkrad 10, z.B. mittels der Bohrungen 14/33, befestigt, also z.B. angeschraubt.

Dadurch, daß schon beim Einschieben des Gehäuses 30 in die Aussparung 11 der zweite Stecker 31 in das Fenster 13 hineinragt, also dann an einer geschützten Stelle 13 hinten am Lenkrad 10, vom Monteur weggerichtet in seiner endgültigen Position liegt, und dadurch, daß dann dieses Gehäuse 30 in dieser Position an ihren Befestigungsstellen 14/33 am Lenkrad 10 befestigt, z.B. dort verschraubt wird, ist die Montage der im übrigen sehr raumsparenden erfindungsgemäßen Anordnung stark erleichtert, - und zwar so stark, daß selbst eine Montage in Großserie durch nur angelerntes, mäßig geschultes Personal ausreichend langfristig zuverlässig möglich ist. Selbst ein nachträgliches Testen des fertig montierten Lenkrades 10 ist nur noch in eingeschränktem Maße nötig, wenn überhaupt nötig. Außerdem bietet das gezeigte Beispiel zumindest im Prinzip die Möglichkeit, die Anordnung später, z.B. nach einem Crash mit Auslösung des Airbag, in ebenso einfacher Weise langfristig zuverlässig zu reparieren, solange das Lenkrad 10 beim Crash nicht zu deutlich verformt wurde. Zur Reparatur reicht nämlich im allgemeinen schon das einfache leichte Austauschen der bisher im Lenkrad befestigten Teile gegen gleiche neue Teile.

Die Figur 1 zeigt, daß hier das Gehäuse 30 der Steuerelektronik bei 32 eine Ausbuchtung hat. Sobald das Gehäuse 30 im Lenkrad 10 - z.B. an den Stellen 14/33 - bereits befestigt ist, läßt das 50 geformte Gehäuse 30 zu, daß das Zentralloch 12 des Lenkrades 10 auch noch jetzt ausreichend frei zugänglich bleibt, um erst jetzt das Lenkrad 10 am Zentralloch 12 an der Lenkspindel zu befestigen, z.B. zu verschrauben. Wegen der Ausbuchtung 32 bleibt nämlich genügend Platz für einen nachträglichen Zugriff auf die Verschraubung im Bereich des Zentralloches 12. Trotz dieser Ausbuchtung 32 deckt aber das im Lenkrad 10 befestigte Gehäuse 30 nicht nur den ersten und den zweiten Stecker 5/31, sondern auch den später beschriebenen dritten und vierten Stecker 31/20 ab, wodurch die gesamte Steckverbindungen 5/31/20 auch beim späteren, mäßig vorsichtigen Hantieren an der Verschraubung des Lenkrades 10 an der Lenkspindel, nicht mehr oder kaum noch offen zugänglich, also gut geschützt ist, sowohl in späteren Montagephasen als auch im späteren Betrieb, - trotz der Einfachheit einer solchen Montage, und zwar in besonders Platz sparen der Weise.

Die Erfindung gestattet, nicht nur die Steckverbindung zwischen dem ersten und dem zweiten Stecker 5/31 sehr leicht herzustellen bzw. vorzubereiten. Man hat überdies mindestens drei weitere Untervarianten für die Montagereihenfolge zur Auswahl:

Erstens kann man, selbst bevor das Lenkrad 10 an der Lenkspindel befestigt wird und zwar selbst bei einer Großserienfertigung mit nur angelerntem Personal, zunächst zuverlässig und haltbar den ersten Stecker 5 mit dem zweiten Stecker 31 für sich verbinden, danach dieses Steckerpaar 5/31, das dann am Gehäuse 30 hängt, mittels des Gehäuses 30 in das Fenster 13 schieben sowie danach das Gehäuse 30 an der Lenkradnabe - z.B. bei 14/33 - befestigen. Dann ragt die Leitungsanschluß-Seite des ersten Stecker 5 in das Fenster 13 hinein und bleibt mittels des Fensters 13 - jedenfalls zunächst - weiterhin für den Monteur zugänglich. Danach kann man von rückwärts her beim Fenster 14 die Verbindungsleitung(en) 1 an den ersten Stecker 5 anschließen. Man kann dann später auch bei Bedarf das Lenkrad 10 - bei Bedarf zusammen mit der Verbindung des ersten Steckers 7 entweder mit der Verbindungsleitung 1 oder mit dem zweiten Stecker 31 - beliebig oft von der Lenkspindel wieder trennen und erneut befestigen, in der Regel ohne das Gebilde aus Lenkrad 10, Steuerelektronik-Gehäuse 30 und zweiten Stecker 31 zerlegen zu müssen.

Zweitens kann man ähnlich einfach und zuverlässig den ersten Stecker 5 in der Lenkradnabe seitlich von dem Zentralloch 12 bei oder in einer / einem durchgehenden Bohrung / Fenster 13 befestigen, noch bevor man das Gehäuse 30 der Steuerelektronik zusammen mit dem am Gehäuse 30 befestigten zweiten Stecker 31 in die entsprechende Aussparung 11 des Lenkrades 10 einschiebt und das Gehäuse 30, z.B. an den Stellen 14/33, befestigt. Hierbei wird durch das Einschieben des Gehäuses 30 gleichzeitig die Verbindung beider Stecker 5/31 erreicht. Dabei kann man den ersten Stecker 5 sogar - als weitere Untervariante - so in Bohrungs- bzw. Fensternähe 13 befestigen, daß der erste Stecker 5 nicht schon vor seiner Befestigung im Lenkrad 10, sondern z.B. sogar erst nach dem Befestigen des Gehäuses 30 an der Lenkradnabe von hinten her mit der / den zugeordneten Verbindungsleitung(en) 1 nachträglich verbunden wird, z.B. sogar erst nachdem das so weit vormontierte Lenkrad an der Lenkradspindel angeschraubt wurde, - weil nämlich auch dann in manchen Fahrzeugtypen noch genügend Platz für einen Zugriff auf den ersten Stecker 5 von hinten her vorhanden ist. In allen diesen Fällen, in denen der erste Stecker 5 vor dem Einschieben des Gehäuses 30 am Lenkrad 10 befestigt wird, ist es also jedenfalls im Prinzip so einrichtbar, daß der erste Stecker 5 mit der / den betreffenden Verbindungsleitung(en) 1 unabhängig davon verbunden werden kann, ob zuvor das Gehäuse 30 an der Lenkradnabe befestigt wurde oder nicht, und zwar selbst bei einer Großserienfertigung mit nur angelerntem Personal. Ferner ist dann zumindest im Prinzip auch möglich, die Position des ersten Steckers 5 so zu wählen, daß bei Bedarf auch noch später, lange nach Inbetriebnahme des Fahrzeuges, diese Verbindung des ersten Steckers 5 mit der / den zugeordneten Verbindungsleitung(en) 1 beliebig oft und besonders leicht wieder getrennt und wiederhergestellt werden kann, ohne die Zuverlässigkeit der Verbindung des ersten Steckers 5 mit dem zweiten Stecker 31 zu gefährden, jedenfalls solange hierbei ständig zumindest das Gehäuse 30 am Lenkrad 10 befestigt bleibt.

Drittens kann man - in für die Großserienfertigung mit nur angelerntem Personal besonders geeigneter Weise - zuerst nur das Gehäuse 30 zusammen mit seinem zweiten Stecker 31 im Lenkrad, z.B. bei 14/33, befestigen, wobei dann der zweite Stecker 31 in das Fenster 13 bereits hineinragt; - erst später, z.B. erst bei dem oder nach dem Anschrauben des Lenkrades 10 an die Lenkspindel, wird von rückwärts her der erste Stecker 5 durch das Fenster 13 mit dem starr am Gehäuse befestigten zweiten Stecker 31 verbunden. Im Prinzip kann man auch dann beliebig oft das Lenkrad samt Gehäuse 30 von der Lenkspindel wieder trennen und erneut dort anschrauben, zumindest wenn man hierbei jeweils auch die Verbindung des ersten Steckers 5 mit dem zweiten Stecker 31 vorübergehend mittrennt; - und zwar jedenfalls im Prinzip ohne die Zuverlässigkeit der Verbindung des ersten Steckers 5 mit dem zweiten Stecker 31 stark zu gefährden, solange hierbei ständig das Gehäuse 30 am Lenkrad 10 befestigt bleibt. Dadurch, daß hierbei der zweite Stecker 31 nach dem Befestigen des Gehäuses 30 der Steuerelektronik am Lenkrad 10 in das Fenster 13 der Lenkradnabe seitlich vom Zentralloch 12 kippfest hineinragt, kann man also den ersten Stecker 5 auch noch nach der Befestigung des Gehäuses 30 am Lenkrad 10 mit dem zweiten Stecker 31 in dem in der Lenkradnabe seitlich von dem Zentralloch 12 liegenden Fenster 13 von hinten her verbinden, gerade dies macht diese Montagevariante selbst für einen relativ rauhen Großserienbetrieb sowohl während der späteren Montagephasen als auch bei der Zwischenlagerung besonders geeignet.

Die erfindungsgemäße Lösung eröffnet also auch einen Weg, um die Montage unkompliziert und narrensicher dadurch zu erreichen,
- daß sogar zuerst der zweite Stecker zusammen mit dem Gehäuse der Steuerelektronik in eine entsprechende Aussparung des Lenkrades eingeschoben und am Lenkrad endgültig befestigt - z.B. angeschraubt - wird,
- bevor das Lenkrad an das obere Ende der Lenkspindel gesteckt und bevor der erste Stecker von außen in das Lenkrad gesteckt wird,
- wonach das so vormontierte Lenkrad endgültig an der Lenkspindel befestigt wird, wofür es in sich mindestens zwei Varianten gibt :
   ° bei der ersten Variante ist der erste Stecker an der Lenksäule, z.B. an der später beschriebenen dortigen "Kapsel", bereits dann befestigt, wenn das vormontierte Lenkrad auf das obere Ende der Lenkspindel aufgesteckt und festgeschraubt wird, wobei durch das Aufstecken des Lenkrades gleichzeitig der erste Stecker in den zweiten Stecker geschoben wird;
   ° bei der zweiten Variante wird der erste Stecker nach dem Festschrauben des Lenkrades an der Lenkspindel in den zweiten Stecker gesteckt, z.B. indem nachträglich eine mit dem Lenkrad mitdrehende "Kapsel", welche den ersten Stecker mitenthält, von rückwärts an die Lenkradnabe festgeschraubt wird.

Man hat also einen erheblichen Spielraum bei der Wahl der Montagereihenfolge. Letztere ist also leicht an die örtlich jeweils gegebenen Bedürfnisse der Produktion anpaßbar, selbst an Großserien mit nur angelerntem Personal.

In der Figur 2 ist beispielhaft die Form des ersten Steckers 5 gezeigt, welcher seinerseits z.B. am Boden der auch in den Figuren 1 und 5 gezeigten Kapsel 2 ausreichend kippfest so befestigt sein kann, daß er zuverlässig aus der Kapsel 2 weit herausragt, nämlich noch in das im Lenkrad 10 angebrachte Fenster 13 hineinragt und dadurch bei der Montage von hinten her in das Fenster 13 des Lenkrads 10 leicht und zuverlässig, auch von nur angelerntem Personal bei Großserienfertigung, durch Aneinanderdrücken der Kapsel 2 und des Lenkrades 10 hineingeschoben werden kann. Dieser erste Stecker 5 ist also in der Kapsel 2 oder im Bereich der Kapsel 2, zumindest für die Phase des Zusammensteckens des ersten Stecker 5 und zweiten Steckers 31, mehr oder weniger kippfest so stabilisiert, daß sein(e) Pol(e) parallel zu Lenkspindelachse liegen, um diese Phase der Montage zu erleichtern.

Bei dieser Ausgestaltung des ersten Steckers 5 muß letzterer also nicht unbedingt selber zusätzlich im Fenster 13 befestigt werden - im Prinzip genügt dann sogar, alleine die Kapsel 2 solide am Lenkrad 10 zu befestigen, um eine Verbindung zwischen dem ersten und dem zweiten Stecker 5/31 zu erreichen, - wobei im Prinzip dieser erste Stecker 5 sowohl schon vor dem Verbinden des ersten Steckers 5 mit dem zweiten Stecker 31, aber auch erst nach dem Verbinden des ersten Steckers 5 mit dem zweiten Stecker 31, mit den Verbindungsleitungen 1 verbunden werden kann. Es handelt sich hier also um eine besonders einfach montierbare Variante der Erfindung.

Das gezeigte Beispiel enthält im Grunde vier verschiedene Stecker, welche aber gemeinsam nach dem Ineinanderstecken nur noch einen einzigen kompakten Block bilden:

In diesem speziellen Beispiel bilden nämlich der zweite und der dritte Stecker 31, die am Gehäuse 30 starr befestigt sind, gemeinsam ein einziges, entsprechend vielpoliges - hier sechspoliges - Steckergebilde 31, vgl. die Figur 1. Der zweite Stecker wird hierbei durch zwei der sechs Pole, der dritte Stecker durch die restlichen vier Pole dieses Steckergebildes 31 gebildet. Im gezeigten Beispiel ist also am Gehäuse 30 nicht nur der zweite Stecker 31, sondern dicht daneben auch der dritte Stecker befestigt, wobei in besonders kompakter, raumsparender und aufwandssparender Weise der zweite Stecker zusammen mit dem dritten Stecker gemeinsam ein einziges, entsprechend vielpoliges - hier sechspoliges - Steckergebilde 31 bilden. Letzteres weist also noch mindestens einen weiteren, zusätzlichen Pol - im gezeigten Beispiel noch vier zusätzliche Pole - auf, welche dem dritten Stecker entsprechen, vgl. die Figur 1 und 5.

Man kann, z.B. vor der Befestigung des Gehäuses 30 in der Lenkradnabe 11, in diesen dritten Stecker 31 - genauer : in die hier vier zusätzlichen Pole 23 - einen vierten Stecker 20 - hier ein eigenes Buchsengehäuse 20 - mit mindestens einem einzigen eigenem Kabel - hier mit zwei eigenen Kabeln 25, vgl. die Figur 1 - stecken. Das Steckergebilde 31 enthält also im gezeigten Beispiel sechs Polstifte.

Wenn ein dritter Stecker, vgl. 31, an jener Seite des Gehäuses 30 befestigt wird, welche nach dessen Befestigung an der Lenkradnabe zur Lenkradnabe 11 hin und damit vorher vom einschiebenden Monteur weg orientiert ist, kann man erreichen, daß, ebenfalls dann vom Monteur weg orientiert, noch eine oder mehrere weitere Steckverbindungen, vgl. die Verbindung des dritten und vierten Steckers 20/31, im Lenkrad 10, ähnlich wie der zweite Stecker 31 geschützt, angebracht werden für weitere Signalleitungen der Steuerelektronik 30, also z.B. zum Gasgenerator 40 für dessen Zündung. Diese weiteren Steckverbindungen sind dann nämlich ähnlich wie der zweite Stecker 31 sowohl während dieser Montagephase und den noch späteren Montagephasen, als auch während der späteren Benutzung des Fahrzeugs gut geschützt nahe der Lenkradnabe neben der Steckverbindung 5/31 hinter dem Gehäuse 30 der Steuerelektronik angebracht. Außerdem sind in diesem speziellen Beispiel auch der erste Stecker 5 und der vierte Stecker 20 nach der Montage, z.B. durch die in den Figuren 2, 3 und 4 gezeigten Schwalbenschwänze 6/24 ineinander verzahnt - so zusammenfügbar, daß auch diese beiden Stecker 5/20 nur noch ein einziges gemeinsames Gebilde 5/20 bilden.

Der in der Figur 3 gezeigte vierte Stecker 20 hat dann in der Seitenansicht z.B. die in der Figur 4 gezeigte Form, wobei in der Figur 4 zusätzlich schematisch angedeutet ist, daß von diesem vierten Stecker 20 noch die beiden, in der Figur 1 gezeigten Kabel 25 abgehen. In der Figur 4 ist außerdem angedeutet, daß - nach dem Ineinanderschieben des ersten Steckers 5 und des vierten Steckers 20 mittels der Schwalbenschwänze 6/24 - diese beiden Stecker 5/20 mittels einer Feder 26 zusätzlich miteinander verrastet werden können, wobei diese Verrastung bei 26 ohne weiteres dann erfolgt, wenn das in der Figur 1 gezeigte Gehäuse 30 mit ihrem Steckergebilde 31 in die Aussparung 11 des Lenkrades 10 hineingeschoben sowie der erste Stecker 5, z.B. zusammen mit der daran befestigten, in der Figur 1 gezeigten Kapsel 2, von hinten her in das Fenster 13 unter Verzahnung der Schwalbenschwänze 6/24 geschoben (und ggf. die Kapsel 2 am Lenkrad 10 und / oder an der Lenksäule befestigt) wird. - Die Verrastung der beiden Stecker 5/20 sorgt für sich zusätzlich für eine ausreichend langzeitstabile Verbindung zwischen der / den Verbindungsleitung(en) 1 und der Steuerelektronik 30. Bei dieser Montage kann also zuerst der vierte Stecker, hier das Buchsengehäuse 20, auf die entsprechenden Pole des Steckergebildes 31 gesteckt werden, und danach,
- entweder bevor das Gehäuse 30 in die Aussparung 11, damit das Steckergebilde 31 zusammen mit dem dritten Stecker / Buchsengehäuse 20 in das Fenster 13 der Lenkradnabe gesteckt wird, zuerst der hier zweipolige erste Stecker 5 von hinten her in das Fenster 13 geschoben, wonach durch Einschieben des Gehäuses 30 in die Aussparung 11 der kompakte Steckverbindungsblock 5/20/31 hergestellt werden,
- oder nachdem das Gehäuse 30 in die Aussparung 11, damit das Steckergebilde 31 zusammen mit dem dritten Stecker / Buchsengehäuse 20 in das Fenster 13 der Lenkradnabe gesteckt wird, zuerst das Gehäuse 30 in die Aussparung 11 geschoben und dadurch die miteinander verbundenen zweiten, dritten und vierten Stecker 31/20 in das Fenster 13 geschoben werden, wonach von hinten her durch Einschieben des ersten Steckers 5 in das Fenster 13 der kompakte Steckverbindungsblock 5/20/31 hergestellt wird.

Man erreicht dadurch jeweils eine besonders kompakte, raumsparende, zuverlässige und aufwandssparende Steckverbindung 5/20/31. Dabei kann - aber muß an sich nicht - das ganze, kompakt miteinander verbundene Gebilde aus zweitem, dritten und vierten Stecker 31/20 nach der Endmontage in das Fenster 13 der Lenkradnabe hineinragen; es genügt, wenn von hinten her für den ersten Stecker 5 der zweite Stecker 31 genug zugänglich bleibt. Dabei bilden der erste und der vierte Stecker 5, 20 zwar vor der Montage jeweils zwei getrennte Stecker 5, 20, aber nach dem Ende der Montage ein gemeinsames - z.B. unmittelbar miteinander über die Schwalbenschwänze 6/24 verzahntes - Steckergebilde 5/20. Ein kompliziertes Einfädeln oder kompliziertes Verbinden der Stecker 5/20/31 entfällt also auch bei diesen Varianten der Erfindung. Dann hängt außerdem nach der Endmontage nur der erste Stecker 5 (evtl. über eine Kapsel 2) an der Lenksäule, während der vierte Stecker 20 über den dritten Stecker 31 am Gehäuse 30 der Steuerelektronik hängt.

Die Figur 5 zeigt schematisch den in der Figur 2 gezeigten ersten Stecker 5 nach dem Zusammenfügen mit dem in der Figur 3 gezeigten vierten Steckers 20 mittels der Schwalbenschwänze 6/24 - der Übersichtlichkeit wegen ist das Lenkrad 10 selber nicht miteingezeichnet - , nachdem über diese zusammengefügten Stecker 5/20 auch noch das am Gehäuse 30 befestigte Steckergebilde 31 geschoben ist.

Der vierte Stecker 20 leitet Ausgangssignale der Steuerelektronik 30 an zumindest ein einziges weiteres Organ 21/22 weiter. Vom hier vierpoligen Buchsengehäuse 20 gehen im gezeigten Beispiel zwei Kabel 25 ab, vgl. die Figur 1. Das eine Kabel 25 davon leitet die Ausgangssignale der Steuerelektronik 30 über den Zündpillenstecker 21 zur Zündpille des danach über der Steuerelektronik 30 montierten Gasgenerators 40. Das andere Kabel 25 leitet entsprechende andere Ausgangssignale der Steuerelektronik 30 z.B. an eine Anzeigeeinheit 22, z.B. an ein LED-Ausfallwarnlämpchen. Diese Anzeigeeinheit 22 wird bei der Montage z.B. in den Schlitz 16 des Lenkrades 10 geschoben, wobei dieser Schlitz 16 z.B. in den Kunststoffüberzug des Lenkrades 10 miteingeschäumt sein kann. Diese Anzeigeeinheit 22 dient in montagefreundlicher Weise später für den Fahrzeuglenker z.B. zur Anzeige, ob die Steuerelektronik 30 unter richtiger Betriebsspannung liegt oder ob ein von der Steuerelektronik 30 überwachter Test der - z.B. ebenfalls in dem Gehäuse 30 untergebrachten - Crashsensoren deren Funktionsuntüchtigkeit ergab. Die Anzeigeeinheit kann z.B. auch anzeigen, ob die Steuerelektronik 30 im Rahmen einer Selbstüberprüfung einen Defekt ihrer Funktionstüchtigkeit erkannte. - Beide Kabel 25 können übrigens, insbesondere um sie gegen Beschädigungen während späterer Montagephasen und durch spätere Fahrzeugvibrationen zu schützen, zusätzlich innerhalb der Aussparung 11 in eigene schlitzförmige Kabelhalterungen 17 eingeklemmt werden, wobei diese Halterungen 17 ebenfalls in den Kunststoffüberzug des Lenkrades 10 miteingeschäumt sein können, vgl. die Figur 1.

Auch bei der Erfindung kann man also unschwer erreichen - wie am Beispiel dieser zusätzlichen Pole des dritten und vierten Steckers 31/20 gezeigt wird, daß weitere, ebenfalls in der Lenkradnabe gut geschützte Steckverbindungen 31/20 zwischen den betreffenden Signalausgängen der Steuerelektronik 30 einerseits und einem oder mehreren zusätzlich angebrachten Leitungen / Kabeln 25 andererseits anbringbar sind, wobei solche Kabel 25 elektrische Verbindungen nicht nur zur Zündpille des Gasgenerators 40, sondern bei Bedarf auch noch zu anderen, von der Steuerelektronik 30 gesteuerten Organen, z.B. auch zu einer ebenfalls im Lenkrad 10 befestigbaren Anzeigeeinheit 22, herstellen können.

Es ist jedoch auch möglich, eine an beliebiger anderer Stelle im Fahrzeug abseits vom Lenkrad 10, z.B. am Instrumentenpaneel, angebrachtes Organ mit im Lenkrad 10 erzeugten Signalen, z.B. mit Ausgangssignalen der Steuerelektronik 30, zu versorgen. Bei der Erfindung kann man dazu einen ersten Stecker 5 verwenden, welcher dafür zumindest einen weiteren Pol 7 aufweist, vgl. die Figur 2, um über eine diesem Pol 7 zugeordnete Verbindungsleitung 1 Signale von einem am Lenkrad 10 angebrachten Signalerzeuger 30 - eben z.B. von der Steuerelektronik 30 - zu dem an der Karosserie befestigten Organ - z.B. zu einem Anzeigeinstrument im Instrumentenpaneel - weiterzuleiten. Die Steuerung eines solchen Organs kann man also ohne wesentliche Verkomplizierung der erfindungsgemäß gestalteten Anordnung erreichen.

Nachdem das Gehäuse 30 in der Lenkradnabe 11 - z.B. mittels Bohrungen 14/33 - befestigt, z.B. angeschraubt, wurde, und nachdem dann noch der Gasgenerator 40 auf das Gehäuse 30 aufgelegt und, z.B. durch Schrauben, unmittelbar auf dem Gehäuse 30 und / oder unmittelbar auf dem Lenkrad 10 - befestigt, z.B. ebenfalls angeschraubt, wurde, kann dann noch der eigentliche Airbag 50 auf den Gasgenerator 40 gelegt und in dieser Position am Lenkrad 10 befestigt werden. Danach kann die, z.B. aus Plastik bestehende, Abdeckung 60 über den Airbag 50 so gelegt werden, daß die alle in der Lenkradnabe angebrachten Teile 7, 20, 30 bis 33, 40 und 50 abgedeckt sind. Die Abdeckung 60 kann nicht nur durch geschickte Gestaltung ihrer äußeren Umrisse gegen Verdrehen gesichert sein, sondern z.B. auch mittels auf der Unterseite der Abdeckung 60 angebrachten Stiften, welche in die im Lenkrad 10 angebrachten Löcher 15 eingreifen.

In der Figur 1 ist links jene hier runde Kapsel bzw. Dose 2 mit einem zentralen Loch 8, also zentraler Öffnung 8 gezeigt. Durch die zentrale Öffnung 8 der Kapsel 2 wird das obere, lenkradnahe Ende der Lenkspindel geschoben, bevor dort das Lenkrad 10 an der Lenkspindel befestigt, also insbesondere festgeschraubt wird. An den Befestigungsteilen 4 kann die Kapsel 2 entweder mit der Lenksäule bzw. mit der Karosserie des Fahrzeuges verbunden werden, z.B. verschraubt werden - oder auch mit der Rückseite der Lenkradnabe starr verbunden, z.B. verschraubt werden.

Die Figur 5 deutet beispielhaft die Dicke des Innenraumes dieser Kapsel 2 an. In dieser Kapsel 2 ist ein spiralförmig rund um die auch in der Figur 1 gezeigte zentrale Öffnung 8 gewickeltes Leitungs-Zwischenstück 3 in für sich bekannter Weise angebracht, vgl. die oben zum Thema "spiralförmig gewickelte Leitungs-Zwischenstücke" genannten Druckschriften. Die Kapsel 2 soll das in ihr angebrachte Leitungs-Zwischenstück 3 mit wenig Aufwand gegen Beschädigungen und Verschmutzungen schützen. Das Leitungs-Zwischenstück 3 ist so locker spiralförmig gewickelt, daß es beim Drehen des Lenkrades in beide Drehrichtungen bis zum jeweiligen Anschlag nicht beschädigt wird. Dadurch dreht / drehen sich die Verbindungsleitung(en) 1 nicht mit, wenn später am Lenkrad 10 gedreht wird. Man kann dadurch einen Schleifring zwischen den Stromführungsleitungen einerseits und dem ersten Stecker andererseits vermeiden, wobei ein Schleifring durch Verschmutzen, Korrodieren und Abnutzen die Zuverlässigkeit der Anordnung beeinträchtigen könnte. Durch das spiralförmige Leitungs-Zwischenstück 3 wird aber eine zuverlässige Verbindung zwischen den Stromführungsleitungen einerseits und dem ersten Stecker bzw. dessen Anschluß andererseits in raumsparender, montagefreundlicherweise ermöglicht.

Ein Ende des spiralförmig aufgewickelten Leitungs-Zwischenstückes 3 ist mit dem hier zweipoligen ersten Stecker 5 verbunden - das andere Ende des Leitungs-Zwischenstückes 3 ist mit der / den Verbindungsleitung(en) 1 verbunden. 1 ein Stück der Verbindungsleitung(en) 1 gezeigt, welche z.B. zur Stromversorgung der Steuerelektronik 30 dient / dienen. Die Figur 2 deutet außerdem an, daß die spiralförmig gewickelte, in der Kapsel 2 untergebrachte Zwischenleitung 3 nach dem spiralförmigen Wickeln angenähert ein ringförmiges geschichtetes Gebilde darstellt, dessen Außendurchmesser z.B. rund 55 mm und dessen Innendurchmesser rund 35 mm beträgt. Dieses Leitungs-Zwischenstück 3 überträgt z.B. die beiden Potentiale der Versorgungsspannung der Batterie des Fahrzeuges zur Steuerelektronik 30.

Die Kapsel 2 ist z.B. staubdicht von hinten her auf die Lenkradnabe gedrückt und so mit der Lenkradnabe auf der Rückseite der Aussparung 11 verschraubt, daß der erste Stecker 5 zuverlässig in dem entsprechenden Fenster 13 der Aussparung 11 des Lenkrades 10 zu liegen kommt.

Zum Toleranzausgleich kann das Gebilde aus dem ersten Stecker 5 und dem vierten Stecker 20, und / oder das Steckergebilde 31, geringfügig schwimmend in der Anordnung montiert sein, was die Gefahr von unerwünschten Verspannungen im Bereich dieser Steckverbindungen 5/20/31 vermindert.

## Patentansprüche

1. An einem durchgehenden Zentralloch (12) mit einer Lenkspindel, bevorzugt durch Verschrauben, befestigbares Lenkrad (10) eines Fahrzeuges, enthaltend
- einen am Lankrad (10) im Bereich der Lenkradnabe (13) befestigten Airbag (50),
- das ebenfalls am Lenkrad befestigte Gehäuse (30) einer bei einem Unfall die Airbagzündung steuernden Steuerelektronik, und
- ein mindestens einpoliges (7/23) Steckerpaar (5/31) - also z.B. eine Steckerbuchse (5) und einen Steckerstift (5) - , dessen (5/31) erster Stecker (5) der Lenkradnabe (13) und dessen (5/31) zweiter Stecker (31) der Steuerelektronik (30) zugeordnet ist, und
- einen oder mehrere Anschlüsse des ersten Steckers (5), um dessen (5) Pole (7) mit einer oder mehreren, über die Lenksäule geführten Verbindungsleitungen (1) zu verbinden, nämlich mit mindestens der - z.B. zweipoligen - Stromversorgungsleitung (1) der Steuerelektronik (30),
**dadurch gekennzeichnet,** daß
- sowohl der - z.B. zweipolige - erste Stecker (5) an der Lenkradnabe (13) abseits vom Zentralloch (12) als auch der zweite Stecker (31) an einem Gehäuse (30) bzw. steifen Teil der Steuerelektronik jeweils ausreichend kippfest und verrutschfest so befestigt sind, daß schon bei der Montage des Lenkrades (10) der zweite Stecker (31) in bzw. auf den ersten Stecker (5) steckbar ist durch Andrücken des Gehäuses (30) der Steuerelektronik zumindest angenähert in Richtung vom Lenkrad (10) zur Lenkspindel hin parallel zur Lenksäule, und
- im zusammengesteckten Zustand des ersten und zweiten Steckers (5/31) das Gehäuse (30) der Steuerelektronik am Lenkrad (10) seinerseits im Bereich der Lenkradnabe (11) befestigt ist.

2. Lenkrad (10) nach Patentanspruch 1,
**dadurch gekennzeichnet,** daß
- das Gehäuse (30) der Steuerelektronik (bei 32) so geformt ist, daß das Lenkrad (10) auch nachträglich, nämlich sogar noch nach dem Befestigen des Gehäuses (30) der Steuerelektronik an der Lenkradnabe (bei 14/33), ausreichend frei zugänglich am Zentralloch (12) mit der Lenkspindel befestigt, z.B. verschraubt, werden kann.

3. Lenkrad (10) nach Patentanspruch 1 oder 2,
**dadurch gekennzeichnet,** daß
- der zweite Stecker (31) nach dem Befestigen des Gehäuses (30) der Steuerelektronik am Lenkrad (10) in ein Fenster (13) der Lenkradnabe seitlich vom Zentralloch (12) kippfest hineinragt.

4. Lenkrad (10) nach Patentanspruch 1 oder 2,
**dadurch gekennzeichnet,** daß
- der erste Stecker (5) vor der Befestigung des Gehäuses (30) der Steuerelektronik am Lenkrad (10) bei oder in einer / einem durchgehenden, in der Lenkradnabe seitlich von dem Zentralloch (12) liegenden Bohrung oder Fenster (13) so befestigt ist, daß der erste Stecker (5) auch noch nach dem Befestigen des Gehäuses (30) der Steuerelektronik an der Lenkradnabe (bei 14/33) ausreichend frei zugänglich mit der / den zugeordneten Verbindungsleitung(en) (1) verbunden werden kann.

5. Lenkrad (10) nach einem der vorhergehenden Patentansprüche,
**dadurch gekennzeichnet,** daß
- das Gehäuse (30) der Steuerelektronik noch einen dritten Stecker (in Figur 1 und 5 in 31 mitenthalten) mit mindestens einem weiteren, zusätzlichen Pol (23) - z.B. mit vier zusätzlichen Polen (23) - trägt, und
- in diesen dritten Stecker (31) - also in die z.B. vier zusätzlichen Pole (23) - ein vierter Stecker (20) - z.B. ein eigenes Buchsengehäuse - mit mindestens einem einzigen eigenem Kabel (25) steckbar ist, welches Ausgangspotentiale der Steuerelektronik (30) an zumindest ein einziges weiteres Organ (21, 22) weiterleitet.

6. Lenkrad (10) nach Patentanspruch 5,
**dadurch gekennzeichnet,** daß
- das Organ (22) bzw. eines der Organe (22) eine am oder im Lenkrad (10) angebrachte Anzeigeeinheit (22), z.B. eine Lampe (22) oder eine LCD-Anzeige (22), ist, welche (22) anzeigt,
-- ob die Steuerelektronik (30) unter richtiger Betriebs Spannung liegt und/oder
-- ob die Steuerelektronik (30) einen Defekt ihrer Funktionstüchtigkeit, z.B. einen Defekt eines zugeordneten Crashsensors, erkannte.

7. Lenkrad (10) nach Patentanspruch 5 oder 6,
**dadurch gekennzeichnet,** daß
- das Gehäuse (30) der Steuerelektronik den dritten Stecker (31) auf jener ihrer Seiten trägt, welche nach ihrer Befestigung an der Lenkradnabe (11) zur Lenkradnabe (11) hin orientiert ist.

8. Lenkrad (10) nach einem der Patentansprüche 5 bis 7,
**dadurch gekennzeichnet,** daß
- der erste und der vierte Stecker (5, 20) vor der Montage zwei getrennte Stecker (5, 20), aber nach dem Ende der Montage ein gemeinsames Steckergebilde (5/20) bilden, indem sie (5/20) nach dem Ende der Montage miteinander (durch die federnde Verrastung (26) und Schwalbenschwänze (6, 24) mechanisch verrutschsicher verbunden sind.

9. Lenkrad (10) nach einem der Patentansprüche 5 bis 8, **dadurch gekennzeichnet,** daß
- der zweite Stecker (31) zusammen mit dem dritten Stecker (31) ein einziges, entsprechend vielpoliges - also z.B. sechspoliges - Steckergebilde (31) bildet.

10. Lenkrad (10) nach einem der vorhergehenden Patentansprüche, **dadurch gekennzeichnet,** daß
- das Gehäuse (30) der Steuerelektronik so angepaßt an die Lenkradnabenform geformt ist, daß das Gehäuse (30) der Steuerelektronik nach seinem (30) Befestigen an der Lenkradnabe (11) die Stecker (5, 20, 31) in dann zuverlässig von außen nicht mehr oder kaum noch offen zugänglicher Weise abdeckt.

11. Lenkrad (10) nach einem der vorhergehenden Patentansprüche,
**dadurch gekennzeichnet,** daß
- der erste Stecker (5) zumindest einen weiteren Pol (7) aufweist, um über eine diesem Pol (7) zugeordnete Verbindungsleitung (1) Signale von einem am Lenkrad (10) angebrachten Signalerzeuger (30) - z.B. von der Steuerelektronik (30) - zu einem an der Karosserie befestigten Organ - z.B. zu einem Anzeigeinstrument im Instrumentenpaneel - weiterzuleiten sind.

12. Lenkrad (10) nach einem der vorhergehenden Patentansprüche,
**dadurch gekennzeichnet,** daß
- der erste Stecker (5) unmittelbar - nämlich ohne zusätzliches schmiegsames Zwischenkabel - an dem einen Ende eines Leitungs-Zwischenstückes (3) befestigt ist, und
- das zwischen dem ersten Stecker (5) einerseits und seiner / seinen zugeordneten Verbindungsleitung(en) (1) andererseits eingefügte Leitungs-Zwischenstück (3) ein spiralförmig um die Lenkspindel so locker gewickeltes Leitungs-Zwischenstück (3) mit mindestens einer Zwischen-Verbindungsleitung (3) bildet,
-- daß beim Drehen des Lenkrades in beide Drehrichtungen bis zum jeweiligen Anschlag die Zwischen-Verbindungsleitung(en) (3) nicht beschädigt wird / werden.

13. Lenkrad (10) nach Patentanspruch 12,
**dadurch gekennzeichnet,** daß
- die spiralförmig gewickelte Leitungs-Zwischenstück (3) in einer Kapsel (2) untergebracht ist.

## Claims

1. Vehicle steering wheel (10) which can be secured, preferably by screwing, at a continuous central through-hole (12) to a steering shaft, said steering wheel containing
- an airbag (50) which is secured to the steering wheel (10) in the region of the steering wheel hub (13),
- the housing (30), also secured to the steering wheel, of an electronic control system which controls the triggering of the airbag in the event of an accident and
- an at least single-pin (7/23) pair of plugs (5/31) - that is to say for example a plug socket (5) and a plug pin (5) - whose (5/31) first plug (5) is assigned to the steering wheel hub (13) and whose (5/31) second plug (31) is assigned to the electronic control system (30), and
- one or more terminals of the first plug (5) in order to connect its (5) pins (7) to one or more connecting lines (1) routed via the steering column, namely at least to the - for example two-pin - power supply line (1) of the electronic control system (30), characterised in that
- both the - for example two-pin - first plug (5) is secured to the steering wheel hub (13) away from the central through-hole (12) and the second plug (31) is secured to a housing (30) or rigid part of the electronic control system in each case in a sufficiently non-tilting and non-slip manner in such a way that already during assembly of the steering wheel (10) the second plug (31) can be plugged into or onto the first plug (5) by pressing the housing (30) of the electronic control system at least approximately in the direction from the steering wheel (10) towards the steering shaft parallel to the steering column, and
- in the assembled state of the first and second plug (5/31), the housing (30) of the electronic control system is secured to the steering wheel (10) itself in the region of the steering wheel hub (11).

2. Steering wheel (10) according to Patent Claim 1, characterised in that
- the housing (30) of the electronic control system (indicated by 32) is shaped in such a way that the steering wheel (10) can be secured, for example screwed, sufficiently freely accessibly at the central through-hole (12) to the steering shaft, even subsequently, namely even after the housing (30) of the electronic control system is secured to the steering wheel hub (indicated by 14/33).

3. Steering wheel (10) according to Patent Claim 1 or 2, characterised in that
- after the housing (30) of the electronic control system is secured to the steering wheel (10), the second plug (31) projects into a window (13) of the steering wheel hub to the side of the central through-hole (12) in a non-tilting manner.

4. Steering wheel (10) according to Patent Claim 1 or 2, characterised in that
- before the housing (30) of the electronic control system is secured to the steering wheel (10), the first plug (5) is secured near to or in a continuous bore or window (13) located in the steering wheel hub to the side of the central through-hole (12) in such a way that the first plug (5) can be connected, even after the housing (30) of the electronic control system is secured to the steering wheel hub (indicated by 14/33) sufficiently freely accessibly to the assigned connecting line or lines (1).

5. Steering wheel (10) according to one of the preceding patent claims, characterised in that
- the housing (30) of the electronic control system also carries a third plug (included in Figure 1 and 5 in 31) with at least one further additional pin (23) - for example with four additional pins (23) -, and
- a fourth plug (20) - for example a separate socket housing - can be plugged into this third plug (31) - therefore into the, for example, four additional pins (23) - with at least a single separate cable (25) which passes on output potentials of the electronic control system (30) to at least one further element (21, 22).

6. Steering wheel (10) according to Patent Claim 5, characterised in that
- the element (22) or one of the elements (22) is an indicator unit (22), for example a light (22) or an LCD display (22), mounted on or in the steering wheel (10), which unit (22) indicates,
-- whether the electronic control system (30) is at the correct operating voltage and/or
-- whether the electronic control system (30) has detected a defect in its operativeness, for example a defect of an assigned crash sensor.

7. Steering wheel (10) according to Patent Claim 5 or 6, characterised in that
- the housing (30) of the electronic control system carries the third plug (31) on that one of its sides which, after being secured to the steering wheel hub (11), is oriented towards the steering wheel hub (11).

8. Steering wheel (10) according to one of Patent Claims 5 to 7, characterised in that
- the first and fourth plugs (5, 20) form, before assembly, two separate plugs (5, 20) but after the end of assembly form a common plug structure (5/20) in that they (5/20) are connected to one another after the end of assembly (by means of the resilient locking element (26) and dovetails (6, 24)) in a mechanically non-slip manner.

9. Steering wheel (10) according to one of Patent Claims 5 to 8, characterised in that
- the second plug (31) forms together with the third plug (31) a single, correspondingly pinned - that is to say for example six-pin - plug structure (31).

10. Steering wheel (10) according to one of the preceding patent claims, characterised in that
- the housing (30) of the electronic control system is shaped so as to be matched to the shape of the steering wheel hub in such a way that the housing (30) of the electronic control system, after it (30) is secured to the steering wheel hub (11), covers the plugs (5, 20, 31) in a manner which is then reliably no longer openly accessible, or hardly openly accessible, from the outside.

11. Steering wheel (10) according to one of the preceding patent claims, characterised in that
- the first plug (5) has at least one further pin (7) in order to pass on signals from a signal generator (30) - for example from the electronic control system (30) - mounted on the steering wheel (10) to an element secured to the bodywork, for example to an indicator instrument in the instrument panel, via a connecting line (1) assigned to this pin (7).

12. Steering wheel (10) according to one of the preceding patent claims, characterised in that
- the first plug (5) is secured directly - that is without additional intermediate flexible cable - to the one end of an intermediate line element (3), and
- the intermediate line element (3) which is inserted between the first plug (5) on the one hand and its assigned connecting line or lines (1) on the other forms an intermediate line element (3), with at least one intermediate connecting line (3), wound around the steering shaft in such a loose spiral
-- that when the steering wheel is turned in both directions as far as the respective stop the intermediate connecting line or lines (3) is/are not damaged.

13. Steering wheel (10) according to Patent Claim 12, characterised in that
- the spirally wound intermediate line element (3) is accommodated in a capsule (2).

## Revendications

1. Volant (10) d'un véhicule, pouvant être fixé, de préférence par vissage, à un arbre de colonne de direction au niveau d'un trou central traversant (12), et comportant
- un airbag (50) fixé au volant (10), dans la zone du moyeu (13) du volant,
- le boîtier (30), également fixé au volant, d'un système électronique de commande, qui commande le déclenchement de l'airbag dans le cas d'un accident, et
- un couple (5/31) au moins unipolaire (7/23) de connecteurs - par conséquent par exemple une douille (5) et une fiche mâle (5) - le premier connecteur (5) de ce couple (5/31) étant associé au moyeu (13) du volant et le second connecteur (31) du couple de connecteurs (5/31) étant associé au système électronique de commande (30), et
- une ou plusieurs bornes du premier connecteur (5), dont les pôles (7) doivent être réunis à une ou plusieurs lignes de raccordement (1) passant dans la colonne de direction, à savoir à au moins la ligne d'alimentation en courant (1) - par exemple bipolaire - du système électronique de commande (30),
caractérisé par le fait que
- aussi bien le premier connecteur (5) - par exemple bipolaire - est fixé au moyeu (13) du volant d'une manière décalée par rapport au trou central (12) et le second connecteur (31) est fixé à un boîtier (30) ou à une partie rigide du système électronique de commande, de manière à résister de façon suffisante à un basculement et à un glissement, de sorte que déjà lors du montage du volant (10), le second connecteur (31) peut être enfiché dans ou sur le premier connecteur (5) par enfoncement du boîtier (30) du système électronique de commande au moins approximativement dans la direction du volant (10) en direction de l'arbre de colonne de direction, parallèlement à la colonne de direction, et
- lorsque les premier et second connecteurs (5/31) sont à l'état enfiché, le boîtier (30) du système électronique de commande est fixé pour sa part au volant (10) au niveau du moyeu (11) du volant.

2. Volant (10) suivant la revendication 1, caractérisé par le fait que
- le boîtier (30) du système électronique de commande (en 32) est formé de telle sorte que le volant (10) peut être fixé, par exemple par vissage, à l'arbre de la colonne de direction, également ultérieurement, à savoir même encore après la fixation du boîtier (30) du système électronique de commande sur le moyeu du volant (en 14/33), de manière à être suffisamment librement accessible au niveau du trou central (12)

3. Volant (10) suivant la revendication 1 ou 2, caractérisé par le fait que
- après la fixation du boîtier (30) du système électronique de commande sur le volant (10), le second connecteur (31) pénètre dans une fenêtre (13) du moyeu du volant, en étant bloqué contre tout basculement latéralement à partir du trou central (12).

4. Volant (10) suivant la revendication 1 ou 2, caractérisé par le fait
- avant la fixation du boîtier (30) du système électronique de commande sur le volant (10), le premier connecteur (5) est fixé au niveau du ou dans un perçage traversant ou une fenêtre (13), situé dans le moyeu du volant latéralement par rapport au trou central (12), de sorte que le premier connecteur (5) peut être également relié, de manière à être suffisamment librement accessible, à la ou aux lignes associées de raccordement (1), encore également après la fixation du boîtier (30) du système électronique de commande au moyeu (en 14/33) du volant.

5. Volant (10) suivant l'une des revendications précédentes, caractérisé par le fait que
- le boîtier (30) du système électronique de commande porte en outre un troisième connecteur (également marqué en 31 sur les figures 1 et 5) comportant au moins un autre pôle supplémentaire (23) - par exemple comportant quatre pôles supplémentaires (23) -, et
- dans ce troisième connecteur (31) - c'est-à-dire dans les par exemple quatre pôles supplémentaires (23) - peut être enfiché un quatrième connecteur (20) - par exemple un boîtier de douille proprement dit - équipé d'au moins un seul câble propre (25), qui retransmet des potentiels de sortie du système électronique de commande (30) à au moins un seul autre organe (21, 22).

6. Volant (10) suivant la revendication 5, caractérisé par le fait que
- l'organe (22) ou l'un des organes (22) est une unité d'affichage (22), qui est disposée sur ou dans le volant (10), par exemple une lampe (22) ou un dispositif d'affichage LCD (22), qui indique,
-- si le système électronique de commande (30) est placé à une tension de fonctionnement correcte et/ou
-- si le système électronique de commande (30) a identifié un défaut de son aptitude de fonctionnement, par exemple un défaut d'un détecteur de collision associé.

7. Volant (10) suivant la revendication 5 ou 6, caractérisé par le fait que
- le boîtier (30) du système électronique de commande porte le troisième connecteur (31) sur chacune de ses faces, qui est orientée en direction du moyeu (11) du volant, après sa fixation sur ce moyeu.

8. Volant (10) suivant l'une des revendications 5 à 7, caractérisé par le fait
- les premier et quatrième connecteurs (5, 20) forment, avant le montage, deux connecteurs séparés (5, 20), mais, une fois le montage terminé, forment une structure commune de connecteurs (5/20), par le fait qu'à la fin du montage, les connecteurs (5/20) sont reliés entre eux d'une manière protégée mécaniquement contre tout glissement (au moyen du système d'encliquetage élastique (26) et des éléments en queue d'aronde (6, 24)).

9. Volant (10) suivant l'une des revendications 5 à 8, caractérisé par le fait que
- le second connecteur (31) forme, avec le troisième connecteur (31), une seule configuration de connecteurs (31) possédant un nombre de pôles correspondant - par conséquent par exemple six pôles.

10. Volant (10) suivant l'une des revendications précédentes, caractérisé par le fait que
- le boîtier (30) du système électronique de commande est conformé d'une manière adaptée à la forme du moyeu du volant de telle sorte qu'après la fixation du boîtier (30) sur le moyeu (11) du volant, le boîtier (30) du système électronique de commande recouvre les connecteurs (5, 20, 31) d'une manière telle que de façon sûre ils ne soient plus accessibles de l'extérieur ou le soient encore à peine.

11. Volant (10) suivant l'une des revendications précédentes, caractérisé par le fait que
- le premier connecteur (5) possède au moins un autre pôle (7), au moyen duquel des signaux doivent être retransmis, par l'intermédiaire d'une ligne de raccordement (1) associée à ce pôle (7), par un générateur de signaux (30) disposé dans le volant (10) - par exemple par le système électronique de commande (30) - à un organe fixé à la carrosserie - par exemple un appareil d'affichage situé dans le tableau de bord.

12. Volant (10) suivant l'une des revendications précédentes, caractérisé par le fait que
- le premier connecteur (5) est fixé directement - à savoir sans câble intermédiaire flexible supplémentaire - à une extrémité d'un élément intercalaire de ligne (3), et
- l'élément intercalaire de ligne (3) inséré entre le premier connecteur (5), d'une part, et la ou les lignes de raccordement (1) qui lui sont associées, d'autre part, forme un élément intercalaire de ligne (3) enroulé d'une manière suffisamment lâche en hélice autour de l'arbre de la colonne de direction avec au moins une ligne intercalaire de raccordement (3),
-- que lors de la rotation du volant dans les deux sens de rotation jusqu'à la butée respective, la ou les lignes intercalaires de raccordement (3) ne sont pas endommagées.

13. Volant (10) suivant la revendication 12, caractérisé en ce que
- l'élément intercalaire de ligne (3) enroulé en hélice est logé dans un capot (2).
